Europäisches Patentamt

European Patent Office

Office européen des brevets

(11) Veröffentlichungsnummer: **0 260 548**
**A2**

(12) **EUROPÄISCHE PATENTANMELDUNG**

(21) Anmeldenummer: **87112951.6**

(22) Anmeldetag: **04.09.87**

(51) Int. Cl.⁴: **G01L 3/24**

(30) Priorität: **17.09.86 DE 3631626**

(43) Veröffentlichungstag der Anmeldung:
**23.03.88 Patentblatt 88/12**

(84) Benannte Vertragsstaaten:
**CH FR GB IT LI NL SE**

(71) Anmelder: **Kiffe, Horst-Gregor**
**Vogelbeerweg 19**
**D-7730 Villingen-Schwenningen(DE)**

(72) Erfinder: **Kiffe, Horst-Gregor**
**Vogelbeerweg 19**
**D-7730 Villingen-Schwenningen(DE)**

(74) Vertreter: **Patentanwälte Dipl.-Ing. Klaus**
**Westphal Dr. rer. nat. Bernd Mussgnug Dr.**
**rer.nat. Otto Buchner**
**Waldstrasse 33**
**D-7730 VS-Villingen(DE)**

(54) **Vorrichtung zum Messen des Energieaufwandes an einem Betätigungsglied.**

㉗ Eine Vorrichtung zum Messen des Energieaufwandes an einem Betätigungsglied, die beispielsweise am Pedal eines Fahrrades oder dgl. anzubringen ist, wird dadurch besonders meßgenau gemacht, daß beliebig kleine Auslenkbewegungen eines Stellgliedes durch ein Schaltorgan auf ein Schaltrad übertragen werden, das seinerseits mit einem die Auslenkbewegungen messenden und aufaddierenden mechanischen Zählwerk in Verbindung steht. Die Übertragung kann entweder durch kammförmige Schaltfedern erfolgen, deren Zungenlängen abgestuft sind und mit einer Außenverzahnung des Schaltrades zusammenwirken, oder es kann im Schaltrad ein empfindlicher Freilauf vorgesehen werden, der die Auslenkbewegungen nur in einer Richtung überträgt.

Fig.1

EP 0 260 548 A2

Xerox Copy Centre

## Vorrichtung zum Messen des Energieaufwandes an einem Betätigungsglied

Die Erfindung betrifft eine Vorrichtung nach dem Oberbegriff des Anspruchs 1.

Eine derartige Vorrichtung ist bereits aus dem DE-GM 85 05 266 bekannt. Es handelt sich dabei um eine einfach und billig herzustellende, rein mechanisch arbeitende Vorrichtung, die trotzdem sehr zuverlässige Meßergebnisse erzielt. Der bei der bekannten Anordnung vorgesehene Reibantrieb mit Reibrad und Reiborgan kann jedoch unter Umständen durch den bei Verschmutzung oder Abrieb leicht auftretenden Schlupf zwischen den reibenden Teilen das Meßergebnis etwas verfälschen.

Ferner ist aus dem DE-GM 82 03 421 eine ähnliche Vorrichtung bekannt, bei der die Energieübertragung auf das Zählwerk mittels Zahnstangenantrieb in Kombination mit einem Richtgesperre zur Verhinderung der Rückwärtsdrehung erfolgt. Diese bekannte Lösung ist vergleichsweise aufwendig herzustellen, und außerdem gehen Auslenkbewegungen des Betätigungsgliedes verloren, welche nur eine zusätzliche Verdrehung des Schaltrades bewirken würden, die geringer ist als der Winkelabstand zwischen zwei Sperrzähnen des Sperr-Rades im Richtgesperre. Die Messung wird daher aus diesem Grunde nicht ganz genau.

Durch die Erfindung soll eine Vorrichtung der eingangs genannten Art so verbessert werden, daß eine genauere Messung der an dem Betätigungsglied aufgewandten Energie möglich ist, wobei jedoch die einfache und billige mechanische Bauweise der Vorrichtung erhalten bleiben soll.

Diese Aufgabe wird erfindungsgemäß durch die kennzeichnenden Merkmale des Anspruchs 1 gelöst.

Dem Fachmann stehen verschiedene diesen Erfindungsgedanken verwirklichende mechanische Übertragungssysteme zur Verfügung. So ist eine beliebig genaue Übertragung der Auslenkbewegungen gemäß Anspruch 2 durch eine kammförmige Schaltfeder erzielbar, deren Zungen unterschiedlich lang sind. Da die Unterteilung der Schaltfeder in Zungen beliebig fein abgestuft werden kann, lassen sich hierdurch beliebig kleine Auslenkbewegungen übertragen.

Gemäß Anspruch 3 kann mit ebenso beliebiger Feineinteilung mittels einer kammförmigen Sperrfeder eine Rückwärtsdrehung des Schaltrades verhindert werden.

Gemäß Anspruch 4 sind die kammartigen Federn dabei an den Zungenenden fein abgestuft, wobei die Feinheit dieser Abstimmung beliebig wählbar ist.

Bei einer weiteren vorteilhaften Ausgestaltung der Erfindung gemäß Anspruch 5 enthält das Schaltrad einen Freilauf, der feinste Auslenkbewegungen des Stellglie des überträgt, bei Rückwärtsdrehung jedoch sofort die Übertragung unterbricht. Die Ansprechfeinheit dieses Freilaufs kann ebenfalls durch dem Fachmann geläufige Maßnahmen beliebig eingestellt werden.

Die Energieübertragung vom Schaltorgan auf das Außengehäuse dieses Freilaufes kann dabei entweder gemäß Anspruch 6 durch eine Reibungsübertragung oder gemäß Anspruch 7 durch formschlüssige Verbindung von Schaltorgan und Schaltrad erfolgen, wobei letztere Verbindung geringfügig aufwendiger, jedoch noch zuverlässiger .ist.

Anhand der Figuren werden Ausführungsbeispiele der Erfindung näher erläutert. Es zeigt

Fig. 1 einen teilweise schematischen Axialschnitt durch die an einer Pedalwelle angebrachte Vorrichtung gemäß der Erfindung,

Fig. 2 einen Teilausschnitt aus Fig. 1,

Fig. 3 eine Ansicht des in Fig. 2 gezeigten Teils gemäß dem Pfeil III in Fig. 2,

Fig. 4 einen weiteren Teilausschnitt aus Fig. 1,

Fig. 5 eine Ansicht des in Fig. 4 gezeigten Teil gemäß dem Pfeil V in Fig. 4,

Fig. 6 einen der Fig. 1 entsprechenden Teilschnitt einer zweiten Ausführungsform der erfindungsgemäßen Vorrichtung,

Fig. 7 einen Teilschnitt längs der Linie VII-VII in Fig. 6,

Fig. 8 einen der Fig. 1 entsprechenden Teilschnitt durch eine dritte Ausführungsform der erfindungsgemäßen Vorrichtung und

Fig. 9 eine Teilansicht gemäß dem Pfeil IX in Fig. 8.

In allen Figuren sind für gleiche oder entsprechende Teile gleiche Bezugszeichen verwendet.

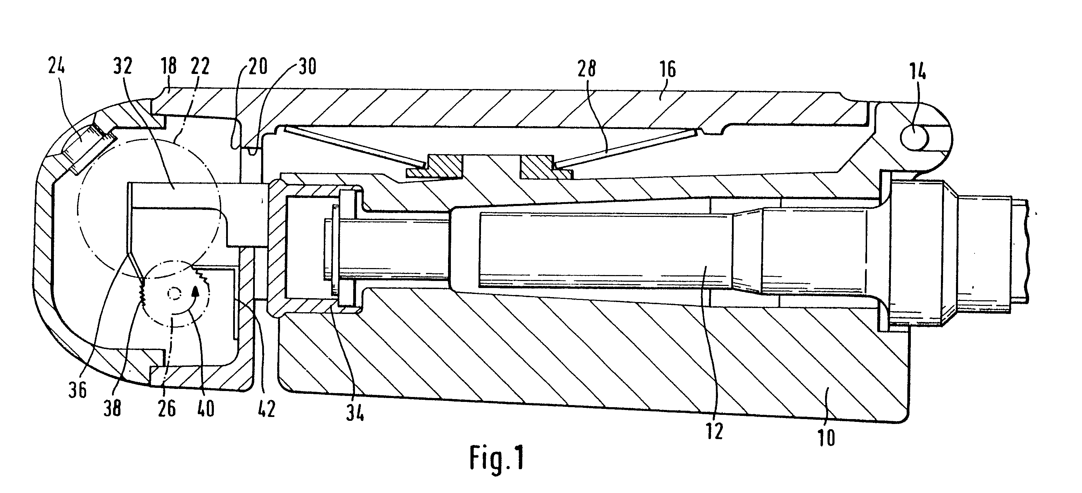

Bei der in den Fig. 1 bis 5 dargestellten ersten Ausführungsform ist ein allgemein mit 10 bezeichnetes Gehäuse auf der Pedalwelle 12 eines Fahrradpedals oder dgl. befestigt. Um eine gehäusefeste Achse 14 schwenkbar ist am Gehäuse 10 ein längs der Oberseite desselben verlaufendes, im wesentlichen ebenes Betätigungsglied 16 gelagert. Am freischwingenden Ende 18 des Betätigungsgliedes 16 ist ein kammerartiges Meßabteil 20 vorgesehen, das ein - schematisch durch eine strichpunktierte Linie angedeutetes mechanisches Zählwerk 22 enthält, welches durch ein Sichtfenster 24 ablesbar ist. In nicht näher gezeigter und an sich bekannter Weise ist das Zählwerk 22 über ein Schaltgetriebe von einem Schaltrad 26 antreibbar.

Zwischen dem Betätigungsglied 16 und dem Gehäuse 10 ist in an sich bekannter Weise eine Blattfeder 28 als Stellglied abgestützt, dessen Auslenkwege bei Energieausübung auf das Betätigungsglied 16 gemessen und aufaddiert werden sollen. Durch einen vertikalen Schlitz 30 des Meßabteils 20 ragt ein Halter 32, der über eine Kappe 34 mit dem Gehäuse 10 und der Pedalwelle 12 starr verbunden ist. Am freien Ende des Halters 32 sitzt eine etwa senkrecht von dessen Längserstreckung abstehende Schaltfeder 36, deren freies Ende mit der Umfangsverzahnung 38 des Schaltrades 26 zusammenwirkt, um das Schaltrad in Richtung des Pfeils 40 zu drehen. Eine an der Wandung des Meßabteils 20 befestigte Sperrfeder 42 greift in der dem Pfeil 40 entgegengesetzten Sperr-Richtung in die Verzahnung 38 ein.

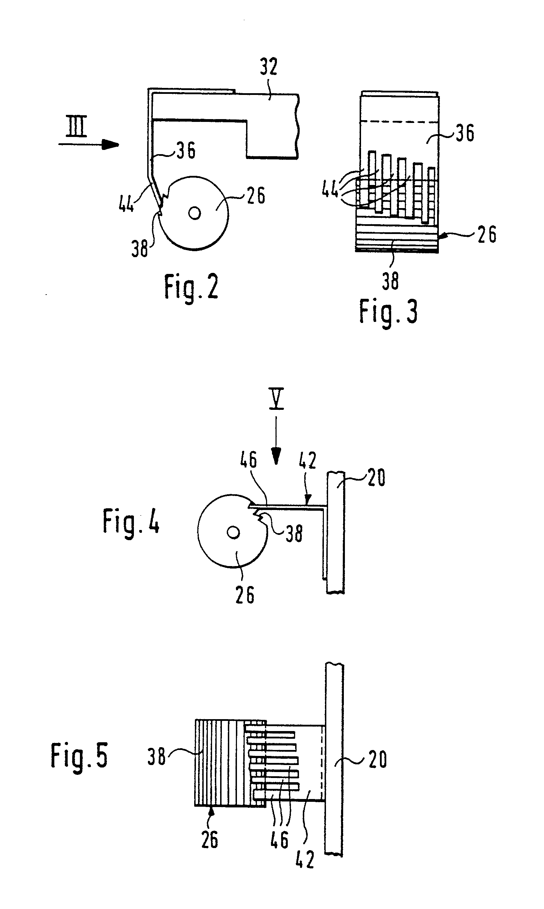

Wie aus den Fig. 3 und 5 ersichtlich, ist sowohl die Schaltfeder 36 als auch die Sperrfeder 42 jeweils kammförmig ausgebildet, wobei die Zungen 44 bzw. 46 der beiden Federn unterschiedliche Länge aufweisen. Bei der dargestellten Ausführungsform ist die Länge der Zungen 44 bzw. 46 quer zur Längserstreckung der Zungen leicht abgestuft, wodurch gewährleistet ist, daß stets eine Zunge ziemlich genau in einen Zahn der Verzihnung 38 eingreift und somit eine sehr genaue Energieübertragung durch die Schaltfeder 36 und Sperrwirkung durch die Sperrfeder 42 gewährleistet sind. Da die Breite der beiden Federn 36 und 42 und entsprechend auch die axiale Länge der Verzahnung 38 beliebig groß und die Zungenunterteilung und -abstufung beliebig fein gewählt werden kann, ist somit eine beliebig feine Energiemessung möglich, die weitgehend von Verschmutzung und Abnutzung unabhängig ist.

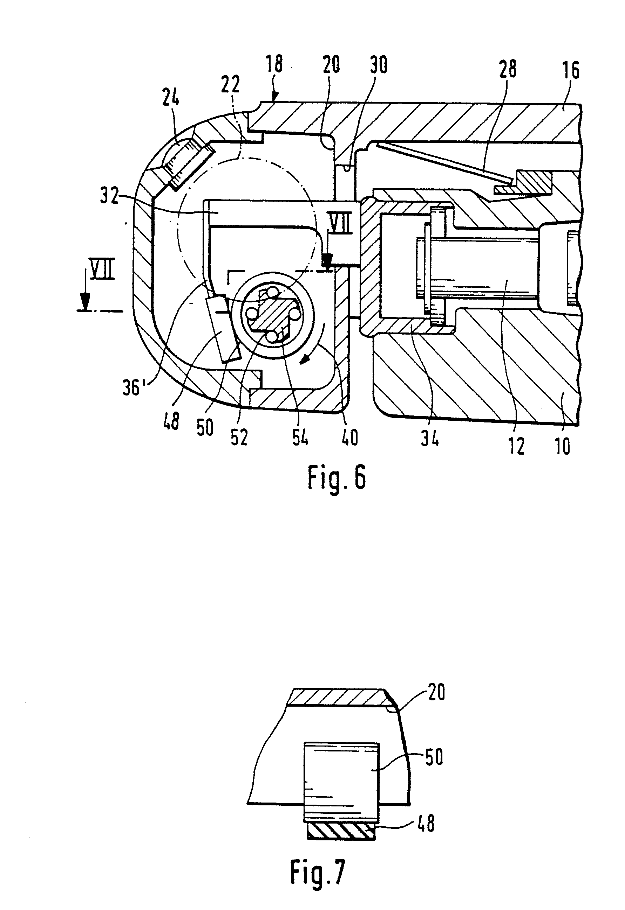

Bei der in den Fig. 6 und 7 dargestellten zweiten Ausführungsform der Erfindung ist am freien Ende der Schaltfeder 36' ein blockförmiges Reibglied 48 angebracht, welches in Reibungsanlage an den Umfang eines ringförmigen Außengehäuses 50 eines allgemein mit 52 bezeichneten Freilaufs angedrückt ist. Die Relativbewegungen zwischen Betätigungsglied 16 und Halter 32 werden somit durch Reibung auf das Außengehäuse 50 übertragen. Bei Drehrichtung des Außengehäuses 50 in Richtung des Pfeils 40 nimmt der Freilauf 52 die Innenwelle 54 mit, während er bei Drehung des Außengehäuses 50 entgegen dem Pfeil 40 die Innen welle 54 freigibt. Der Freilauf 52 kann vom Fachmann jederzeit so eingestellt werden, daß er auch bei feinsten Relativbewegungen die aufgewandte Energie in Richtung des Pfeils 40 überträgt und in der Gegenrichtung unterdrückt. Das durch den Freilauf 52 mit Außengehäuse 50 und Innenwelle 54 gebildete Schaltrad überträgt die aufgewandte Energie in Richtung des Pfeils 40 in der oben geschilderten Weise auf das Zählwerk 22.

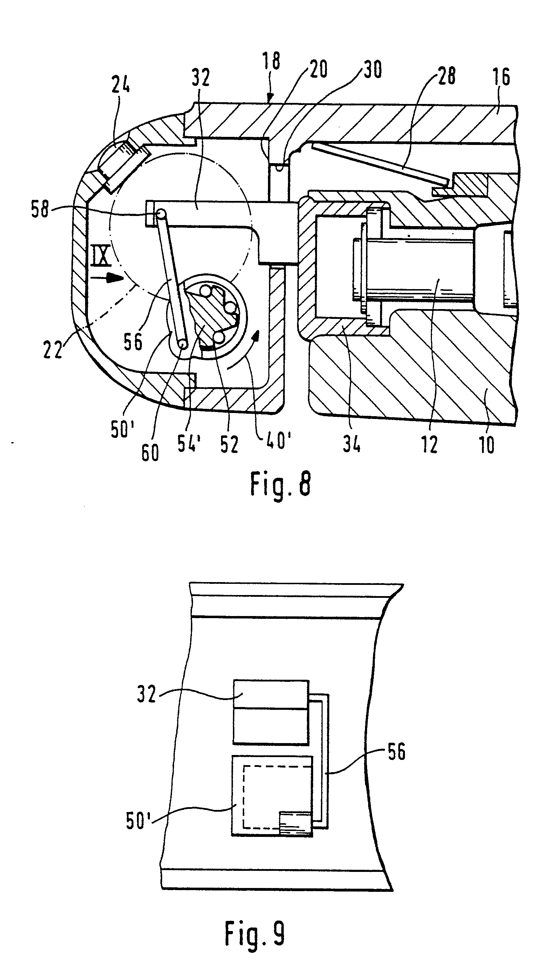

Bei der in den Fig. 8 und 9 dargestellten dritten Ausführungsform ist das Schaltrad ebenfalls von einem Freilauf 52' mit Außengehäuse 50' und Innenwelle 54' gebildet. Die Energieübertragung erfolgt jedoch hier in der entgegengesetzten Richtung gemäß dem Pfeil 40. Bei dieser Ausführungsform ist eine Schubstange 56 an einem Ende mit dem Halter 32 um eine Achse 58 und am anderen Ende mit dem Außengehäuse 50 um eine Achse 60 schwenkbar verbunden. Die Energieübertragung vom Halter 32 auf das Außengehäuse 50 erfolgt hier zwangsweise, so daß ein Schlupf noch sicherer ausgeschaltet wird als bei der Ausführungsform gemäß den Fig. 6 und 7.

## Ansprüche

1. Vorrichtung zum Messen des Energieaufwandes an einem Betätigungsglied, das an einem Stellglied in Form einer Feder anliegt, deren jeweilige Auslenkwege durch eine Übertragungseinrichtung auf eine mechanische Zähleinrichtung übertragen, von dieser aufaddiert und in Energieeinheiten angezeigt werden, wobei die Übertragungseinrichtung ein Schaltorgan aufweist, das mit einem die Zähleinrichtung antreibenden Schaltrad zusammenwirkt, dessen Rückwärtsdrehung durch eine Sperreinrichtung verhindert ist, dadurch gekennzeichnet, daß durch das Schaltorgan (36, 36', 56) beliebig kleine Auslenkbewegungen des Stellgliedes (28) auf das Schaltrad (26; 50, 52, 54; 50', 52', 54') übertragbar sind.

2. Vorrichtung nach Anspruch 1, dadurch gekennzeichnet, daß das Schaltrad (26) eine Verzahnung (38) aufweist, in die jeweils eine Zunge (44) des als kammförmige Schaltfeder (36) ausgebildeten Schaltorgans eingreift, wobei die Zungen (44) unterschiedlich lang sind.

3. Vorrichtung nach Anspruch 1 oder 2, dadurch gekennzeichnet, daß die Sperreinrichtung eine kammartige Sperrfeder (42) aufweist, von der jeweils eine Zunge (46) in Sperr-Richtung in die Verzahnung (38) des Schaltrades (26) eingreift, wobei die Zungen (46) unterschiedlich lang sind.

4. Vorrichtung nach Anspruch 2 oder 3, dadurch gekennzeichnet, daß die Zungenlänge quer zur Längserstrekkung der Zungen (44, 46) gleichmäßig abgestuft ist.

5. Vorrichtung nach Anspruch 1, dadurch gekennzeichnet, daß das Schaltrad einen eine Übertragung einer Rückwärtsdrehung auf die Zähleinrichtung (22) verhindernden Freilauf (52, 52') mit Außengehäuse (50, 50') und Innenwelle

(54, 54') enthält, wobei das Außengehäuse (50, 50') mit dem Schaltorgan (36', 48; 56) und die Innenwelle (54, 54') mit der Zähleinrichtung (22) in Verbindung steht.

6. Vorrichtung nach Anspruch 5, dadurch gekennzeichnet, daß das Schaltorgan ein Reibglied (48) aufweist, welches an dem als Reibrad ausgebildeten Außengehäuse (50) des Freilaufes (52) angreift.

7. Vorrichtung nach Anspruch 5, dadurch gekennzeichnet, daß das Schaltorgan (56) formschlüssig mit dem Außengehäuse (50') des Freilaufes (52') verbunden ist.

Fig.1

0 260 548

III →

32

36

44

38

26

**Fig. 2**

36

44

26

38

**Fig. 3**

V

46   42

20

**Fig. 4**

38

26

V

20

38

26   46   42

**Fig. 5**

Fig. 6

Fig. 7

Fig. 8

Fig. 9